# EUROPÄISCHE PATENTSCHRIFT

(11) **EP 1 384 464 B1**
(45) Veröffentlichungstag und Bekanntmachung des Hinweises auf die Patenterteilung: **14.05.2008**
(21) Anmeldenummer: 03016838.9
(22) Anmeldetag: 23.07.2003
(51) Int. Cl.: A61H 33/00, G05B 15/02

(54) **Steuerungssystem und Steuerverfahren für eine Wellness-Einrichtung**
Control device and control method for wellness device
Dispositif de commande et méthode de commande pour dispositif du bien-être

(30) Priorität: 23.07.2002 DE 10233397
(43) Veröffentlichungstag der Anmeldung: 28.01.2004
(73) Patentinhaber: Abatec-Electronic AG, 4844 Regau (AT); TRADE Handels- u. Produktions Ges.mbH., 5500 Bischofshofen (AT)
(72) Erfinder: Niederndorfer, Friedrich, Dipl. Ing., 4840 Pilsbach (AT); Burger, Johannes, 5500 Bischofshofen (AT)
(74) Vertreter: Jacoby, Georg

(56) Entgegenhaltungen:
- EP-A- 1 291 832
- CA-A- 2 361 096
- DE-A- 10 113 223
- DE-U- 8 627 707
- DE-U- 20 019 896
- DE-U- 29 603 660
- DE-U- 29 621 097
- US-A- 4 413 314

## Beschreibung

Die Erfindung betrifft ein Steuerungssystem und ein Steuerverfahren zum Steuern einer Vielzahl von Antriebsaggregaten, wie Pumpen, Ventile, in einer Wellness-Einrichtung, wie einem Whirlpool, einer Sauna, einer Dampfdusche, einer Licht-Therapie-Anlage.

Wellness-Einrichtungen, wie Whirlpools, umfassen in der Regel eine Vielzahl an Pumpen und Ventile zum Erzeugen und intervallweisen Ein- und Ausschalten von Luft- und Wasserstrahlen im Whirlpool-Becken. Wasserstrahle werden dabei an festen Auslaßpunkten von im Beckenrand eingelassenen Wasserdüsen erzeugt, die über Magnetventile geöffnet oder geschlossen werden können. Mehrere Wasserdüsen sind dabei über eine gemeinsame Sammelleitung mit einer Wasserpumpe verbunden, die das Wasser nach Art eines Kreislaufsystems aus dem Becken abpumpt und unter Druck durch die Düsen zurück ins Becken befördert. Weiterhin sind am Beckenrand von Whirlpools gewöhnlich Luftdüsen angebracht, die von einer einzelnen oder mehreren Luftpumpen über eine Sammelleitung mit Luft versorgt und über Magnetventile geöffnet und geschlossen werden. Die Luftpumpe enthält ferner ein Heizaggregat, mit dem die Luft auf etwa Körpertemperatur aufgewärmt wird, bevor sie über die Luftdüsen ins Becken geblasen wird. Die einzelnen Luft- und Wasserdüsen sind im Beckenrand so verteilt, daß der im Whirlpool Liegende nach Art einer Massage an den unterschiedlichen Körperteilen verschiedene Wasser- und Luftstrahlbehandlungen erfährt. So können beispielsweise im Rückenbereich entlang der Wirbelsäule Wasserdüsen angeordnet sein, die einen gepulsten Wasserstrahl erzeugen, während im Beinbereich vorwiegend Luftdüsen vorgesehen sind, die eine Lockerung der Beinmuskulatur bewirken sollen.

Solche Wellness-Einrichtungen mit einer Vielzahl von Antriebsaggregaten bieten eine große Bandbreite an Einstellmöglichkeiten für ihre einzelnen Antriebsaggregate. Sie ermöglichen dem Bediener gewöhnlich, die verschiedenen Wasser- und Luftdüsen einzeln ein- und auszuschalten, deren Funktionsweise (Dauerbetrieb, Pulsationbetrieb, etc.) festzulegen, wie auch die Intensität der einzelnen Strahlen einzustellen. Hierzu sind die gewöhnlich elektrisch gesteuerten Antriebsaggregate mit Steuermitteln einer Leistungseinheit verbunden. Solche Steuermittel können Relais, Drehzahlregler (Triac-Schaltungen), etc. sein. Ein Drehzahlregler legt beispielsweise ein pulsweitenmoduliertes Steuersignal an eine Wasserpumpe und steuert durch Einstellung des Pulsweitenverhältnis die Intensität des von der Wasserpumpe erzeugten Wasserstrahls. Integriert in solche Wellness-Einrichtungen (in deren Leistungseinheit) ist außerdem eine Bedieneinheit, die z.B. an geeigneter Stelle am Beckenrand vorgesehen ist. Mit ihrer Hilfe steuert der Bediener die einzelnen Antriebsaggregate. Hierzu weist eine solche Bedieneinheit gewöhnlich mehrere Eingabetasten auf, die den einzelnen Antriebsaggregaten zugeordnet sind, und mit denen diese somit ein- oder ausgeschaltet werden können. Wo es erforderlich ist, die Leistung von Pumpen einzustellen, sind manchmal Drehknöpfe oder dergleichen vorgesehen. Es ist auch bekannt, einzelnen Eingabetasten mehrere Funktionen zuzuordnen. So kann beispielsweise eine Eingabtaste zum Einschalten der gesamten Whirlpoolanlage dienen, wobei nacheinander durch erneutes Bedienen dieser Taste verschiedene voreingestellte Steuerungen der einzelnen Antriebsaggregate aufgerufen werden. Solche Bedieneinheiten haben jedoch den Nachteil, daß der Bediener oftmals nicht den gesamten Funktionsumfang der Wellness-Einrichtung ausnutzt, da er sich die einzelnen Funktionen solcher Mehrfunktionstasten nicht dauerhaft merken kann. Darüber hinaus sind solche Bedieneinheiten auch im Gesamtfunktionsumfang eingeschränkt, da nur eine beschränkte Anzahl an vorprogrammierten Steuereinstellungen vorgesehen sind, die auch nachträglich nicht mehr geändert werden können.

Es ist weiterhin bekannt, solche Bedieneinheiten als separate Module nach Art einer Fernsteuerung anzubieten, so daß der Bediener beispielsweise im Whirlpool liegend die einzelnen Funktionen über eine solche Fernbedienung aufrufen kann. Dabei sendet die Bedieneinheit ihre Steuerbefehle als Infrarotsignale an entsprechende Empfangsmittel in der Leistungseinheit, welche diese Steuerbefehle an die einzelnen Steuermittel weiterleitet. Wie bekannt ist, müssen bei Infrarotübertragungen das Sende- und Empfangsmittel in Sichtlinie liegen. Ein Benutzer des Whirlpools kann daher nicht in jeder Stellung die Whirlpoolanlage über eine solche infrarotgesteuerte Bedieneinheit bedienen.

Die CA-A-2 361 096 zeigt ein Steuerungssystem mit den Merkmalen der Oberbegriffe der unabhängigen Ansprüche. Weitere Steuerungssysteme sind in der US-A-4 413 314, DE 200 19 896 U, DE 296 03 660 U, DE 86 27 707 U und DE 296 21 097 U offenbart.

Der Erfindung liegt die Aufgabe zugrunde, die Bedienung von solchen Wellness-Einrichtungen zu vereinfachen.

Sie löst diese Aufgabe jeweils mit den Gegenständen der unabhängigen Ansprüche. Bevorzugte Ausführungsformen sind in den Unteransprüchen beschrieben.

Weitere Vorteile und Merkmale der Erfindung werden nunmehr anhand eines bevorzugten Ausführungsbeispiels mit Bezug auf die beigefügte Zeichnung näher erläutert, in der:
- Fig. 1: schematisch ein Steuerungssystem für eine Wellness-Einrichtung mit einer Leistungseinheit und einer Bedieneinheit zeigt; und
- Fig. 2: beispielhaft einzelne Menüpunkte der menügeführten Benutzerschnittstelle darstellt.

Die Erfindung wird nachfolgend am speziellen Ausführungsbeispiel eines Whirlpools beschrieben, was jedoch nicht einschränkend zu verstehen ist. Mit dem erfindungsgemäßen Steuerungssystem können selbstverständlich beliebige andere Wellness-Einrichtungen, wie eine Sauna, eine Dampfdusche und dergleichen gesteuert werden. Wie nachfolgend näher erläutert wird, können auch unterschiedliche Antriebsaggregate, wie Leuchten u.a. für eine Lichttherapie, Duftzerstäuber für eine Aromatherapie, Musikanlagen zum Abspielen entspannender Musik, Bildanzeigen zum Anzeigen bewegter Bilder (Video, etc.) oder Standbilder (Diaprojektor) usw. in Kombination mit einer solchen Wellness-Einrichtung eingesetzt und zusammen vom Steuerungssystem gesteuert werden.

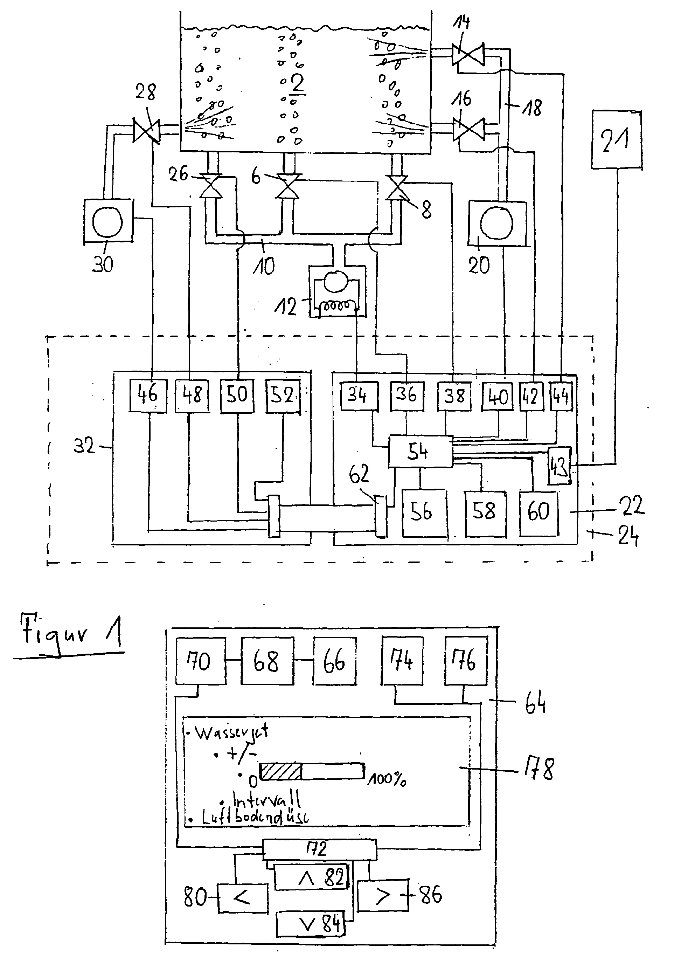

Fig. 1 zeigt schematisch ein Steuerungssystem für einen Whirlpool 2, an dem eine Vielzahl von Antriebsaggregaten vorgesehen ist. Solche Antriebsaggregate sind beispielsweise Magnetventile 6 und 8, die ausgangsseitig mit in der Figur nicht näher dargestellten Luftdüsen und eingangsseitig mit einer Sammelleitung 10 verbunden sind, die wiederum an den Ausgang einer Luftpumpe 12 angeschlossen ist. Die Antriebsaggregate umfassen desweiteren Magnetventile 14 und 16, die ausgangsseitig mit ebenfalls nicht näher dargestellten Wasserdüsen am Beckenrand des Whirlpools 2 und eingangsseitig mit einer Sammelleitung 18 zum Ausgang einer Wasserpumpe 20 verbunden sind. Schließlich ist noch eine Leuchte 21 (z.B. eine Halogenlampe, eine LED-Lampe, oder dgl.) als Antriebsaggregat für das Whirlpool 2 vorgesehen. Die genannten Antriebsaggregate 6, 8, 12, 14, 16, 20 und 21 gehören im gezeigten Ausführungsbeispiel zu einer Grundausrüstung eines Whirlpools 2 und werden von einem Grundmodul 22 einer Leistungseinheit 24 gesteuert.

Am Whirlpool 2 können in einer Ausbaustufe weitere Antriebsaggregate vorgesehen werden. In der Fig. 1 sind als Beispiel hierfür zwei Magnetventile 26 und 28 sowie eine Wasserpumpe 30 gezeigt. Das Magnetventil 26 ist ausgangsseitig wiederum mit einer Luftdüse im Beckenrand und eingangsseitig mit der Sammelleitung 8 verbunden. Das Magnetventil 28 verbindet den Ausgang der Wasserpumpe 30 mit einer entsprechenden Wasserdüse am Whirlpool 2. Diese Antriebsaggregate 26-30 werden von einem Ausbaumodul 32 der Leistungseinheit 24 angesteuert.

Für die Steuerung der einzelnen Antriebsaggregate umfassen das Grundmodul 22 und das Ausbaumodul 32 eine entsprechende Vielzahl an Steuermitteln 34-52. Diese Steuermittel 34-52 können abhängig vom zu steuernden Antriebsaggregat unterschiedlich ausgestaltet sein. Für Magnetventile können beispielsweise transistorgesteuerte Schalter (FETs) vorgesehen werden, welche ausgangsseitig eine Niederspannung an die entsprechenden Magnetventile (beispielsweise 12 V oder 24 V mit einer maximalen Leistungsabgabe von 10 W) anlegen. Wird die Leistungseinheit 24 an die gewöhnliche 230 V Hausstromversorgung angeschlossen, so transformiert ein in der Leistungseinheit 24 vorgesehener Transformator die Spannung auf die benötigten 12 V oder 24 V Gleichspannung, die dann von den transistorgesteuerten Schaltern an die einzelnen Magnetventile angelegt werden. Vorteilhaft können hiermit im unmittelbaren Wannenbereich Antriebsaggregate (Magnetventile, etc.) vorgesehen werden, die im Sicherheitskleinspannungsbereich (12 V bzw. 24 V) arbeiten. Die elektrische Installation rund um das Whirlpool 2 kann somit nach neuesten Richtlinien erfolgen. Die Steuermittel 34, 40 und 46 können beispielsweise Drehzahlregler sein, die über eine Triac-Schaltung realisiert werden, die beispielsweise bei einer Ausgangsspannung von 230 V eine maximale Leistung von bis zu 1200 W abgibt. Die Drehzahlregelung erfolgt über eine Pulsweitenmodulation der Ausgangsspannung. Wenn keine Drehzahlregelung erforderlich sein sollte, könnten einzelne oder alle diese Steuermittel auch als einfache Relais-Ausgänge ausgebildet sein, welche die Netzspannung 230 V ein- und ausschalten (und dabei z.B. eine maximale Leistung von 1300 W abgeben können). Solche Relais-Ausgänge können auch für die Steuerung von am Whirlpool 2 angeordneten Leuchten für eine Lichttherapie, zum Schalten eines Desinfektionsventils und/oder einer Desinfektionspumpe, mit der das Whirlpool 2 desinfiziert werden kann, und/oder zum Schalten von einer oder mehreren Flüssigkeitszerstäuberdüsen für das Zerstäuben von Aromaölen bei einer Aromatherapie etc., angeschlossen sein. Das mit der Leuchte 51 verbundene Steuerteil 43 kann eine Dimmerfunktion bereitstellen, mit der die Helligkeit der Leuchte 51 eingestellt werden kann. Auch die Niedervoltausgänge einzelner Steuermittel 34-52 können in der Spannung einstellbar ausgestaltet sein (z.B. zur Steuerung eines sogenannten Superwirls, bei dem Luft und Wasser gemischt werden).

In der Fig. 1 sind an der Leistungseinheit 24 keine Anschlüsse für im Whirlpool 2 angeordnete Sensoren gezeigt. Solche Sensoren können beispielsweise Temperatursensoren zum Messen der Wassertemperatur (z.B. eine Temperaturfühler mit einem Meßbereich von 0 bis 60° C bei einer Auflösung von 1°, der mit einem zugehörigen analogen Eingang der Leistungseinheit 24 verbunden ist), Wasserstandsensoren zur Messung des Wasserstands im Whirlpool 2 (z.B. zwei Wasserstandsensoren für einerseits den minimalen und andererseits den maximalen Wasserstand, die jeweils an einen digitalen Eingang der Leistungseinheit 24 angeschlossen sind), etc. umfassen. Die Sensoren werden ganz analog den Antriebsaggregaten an entsprechende Eingänge der Leistungseinheit 24 angeschlossen. Das Grundmodul 22 der Leistungseinheit 24 kann standardisiert werden, indem es eine vorgegebene Anzahl an Steuermitteln für Antriebsaggregate und Eingängen für Sensoren oder dergleichen aufweist. Damit kann dieses standardisierte Grundmodul 22 an eine Vielzahl unterschiedlich ausgestalteter Whirlpools 2 (oder sogar anderer Wellness-Einrichtungen) angeschlossen werden, genauer gesagt an deren Antriebsaggregate. Hierzu ist lediglich erforderlich, daß die Antriebsaggregate mit den Steuermitteln spannungs- und stromkompatibel sind (eine spezielle Programmierung der Leistungseinheit zur Festlegung des Steuerbereichs eines Steuermittels für das angeschlossene Antriebsaggregat ist nachfolgend beschrieben). Die Steuermittel 34-44 des Grundmoduls 22 sind intern mit einem Prozessor 54 verbunden, der diese einzeln ansteuern kann. Der Prozessor 54 ist ferner mit einem Energiesender 56, einem Datensender 58, einem Datenempfänger 60 und einer Schnittstelle 62 verbunden. Der Energiesender 56 dient der Übertragung von elektrischer Energie an eine Bedieneinheit 64 zu deren elektrischen Energieversorgung. Mit dem Datensender 58 und dem Datenempfänger 60 werden Steuerbefehle an die Bedieneinheit 64 gesendet und von dieser empfangen. Optional kann der Datensender 58 auch weggelassen werden, wenn keine Übertragung von Information an die Bedieneinheit 64 vorgesehen ist. In der Regel soll die Bedieneinheit 64 aber auch Ist-Zustände des Whirlpools 2 anzeigen, wie die Wassertemperatur, einzelne momentan ablaufende Steuerfunktionen des Whirlpools 2, etc. Selbstverständlich können Datensender 58 und Datenempfänger 60 auch als Sende-/Empfangsmodul gekoppelt werden. Dies gilt auch für eine entsprechende Kopplung des Energiesenders 56 mit einem solchen gekoppelten Modul (die Energie kann von einem gemeinsamen Sender mittels einer Trägerfrequenz übertragen werden, während die Daten dieser Trägerfrequenz aufmoduliert werde, etc.).

Die Schnittstelle 62 dient dem Anschluß des Ausbaumoduls 32 an das Grundmodul 22. Über die Schnittstelle 62 kann beispielsweise die Stromversorgung des Ausbaumoduls 32 erfolgen, wie auch die Übertragung entsprechender Steuerbefehle an die Steuermittel 46-52. Solche Steuerbefehle können beispielsweise über ein Bussystem übertragen werden, wobei hierfür das Ausbaumodul 32 entweder einen entsprechenden Prozessor aufweist, der die Steuerbefehle über den Bus empfängt und an das entsprechende Steuermittel 46-52 weiterleitet, oder die Steuermittel 46-52 sind direkt adressierbar und hängen alle parallel am Bus. An das Steuermittel 52 sind in der Figur 1 übrigens keine Antriebsaggregate angeschlossen, was die Standardisierung auch des Ausbaumoduls 32 illustrieren soll, das eine fest vorgegebene Anzahl an Aus- und Eingängen bereitstellt, an die bedarfsabhängig Antriebsaggregate und Sensoren oder dergleichen angeschlossen werden können. Der Datensender 58, der Datenempfänger 60 und der Energiesender 56 können ebenfalls zusammen über das Bussystem (bzw. über die Schnittstelle 62) mit der Leistungseinheit verbunden werden. Damit können sie in einer Art Docking-Station am Whirlpoolrand angebracht werden, von der Elektronik der Leistungseinheit 24 entfernt.

Die Bedieneinheit 64 ist tragbar ausgestaltet und hierfür in einem eigenen wasserdichten Gehäuse untergebracht. Nach außen weist es keine elektrischen Kontakte auf, so daß es auch im Whirlpool 2 schwimmend liegen kann. Jegliche Kommunikation mit der Außenwelt erfolgt über Funkwellen. Dies gilt auch für die Energieübertragung zur elektrischen Versorgung der Bedieneinheit 64. Hierfür umfaßt die Bedieneinheit 64 einen Energieempfänger 66, der mit einem Lademittel 68 verbunden ist, das einen Akkumulator 70 in der Bedieneinheit 64 auflädt. Der Akkumulator 70 dient der Stromversorgung aller elektrischen Komponenten innerhalb der Bedieneinheit 64. In einer einfacheren Ausgestaltung einer solchen Bedieneinheit können das Lademittel 68 und der Akkumulator 70 weggelassen werden, wobei der Energieempfänger 66 dann die Bedieneinheit direkt mit Strom versorgt. Der Energiesender 56 und der Energieempfänger 66 können so ausgestaltet sein, daß ein bestimmter Maximalabstand von Sender zu Empfänger eingehalten werden muß, damit die Energieübertragung stattfinden kann. Hierzu ist es vorteilhaft, beispielsweise den Energiesender 56 irgendwo am Beckenrand des Whirlpools 2 anzubringen, beispielsweise innerhalb eines Aufnahmedorns zur Aufnahme der Bedieneinheit 64. Die Bedieneinheit 64 weist dann einen entsprechenden Aufnahmeschacht auf, mit dem sie auf den Aufnahmedorn aufgesteckt werden kann. Nur im aufgesteckten Zustand wird Energie vom Energiesender 56 zum Energieempfänger 66 übertragen. Dies funktioniert beispielsweise genauso wie die Energieübertragung bei den elektrischen Zahnbürsten. Als mechanisches Kopplungsmittel zwischen Bedieneinheit 64 und Leistungseinheit 24 sind selbstverständlich andere Alternativen vorstellbar. Gegebenenfalls kann auch ein kleiner magnetbetätigter Schalter am Energiesender 56 vorgesehen werden, der die Energieübertragung nur bei aufgesteckter Energieeinheit 64 startet. Die Energieübertragung selbst kann über eine Art Transformatorschaltung erfolgen. Selbstverständlich kann die Energie auch ohne eine solche mechanische Kopplung übertragen werden (beispielsweise mit Hilfe von Schwingkreisen, die eine Energie von einigen 10 mW über eine Entfernung von etwa einem Meter übertragen).

Die Bedieneinheit 64 umfaßt ferner einen Datensender 74 und einen Datenempfänger 76 zum Senden und Empfangen von Steuerbefehlen an die Leistungseinheit 24. Datensender 74 und Datenempfänger 76 können wiederum als gekoppeltes Sender-/Empfängermodul ausgestaltet sein. Sie sind weiterhin mit einem Prozessor 72 verbunden. Die Sender und Empfänger von Bedieneinheit 64 und Leistungseinheit 24 arbeiten beispielsweise im FM-Bereich (433 MHz oder dergleichen). Der Prozessor 72 kann ein Singlechip-Computer sein, in den das erforderliche Programm zur Steuerung der Bedieneinheit 64 geladen wird. Die Bedieneinheit 64 umfaßt ferner einen Bildschirm 78 (wie eine ein- oder mehrzeilige LCD-Anzeige) und Eingabetasten 80-86, welche beispielsweise die Funktion von Cursortasten haben.

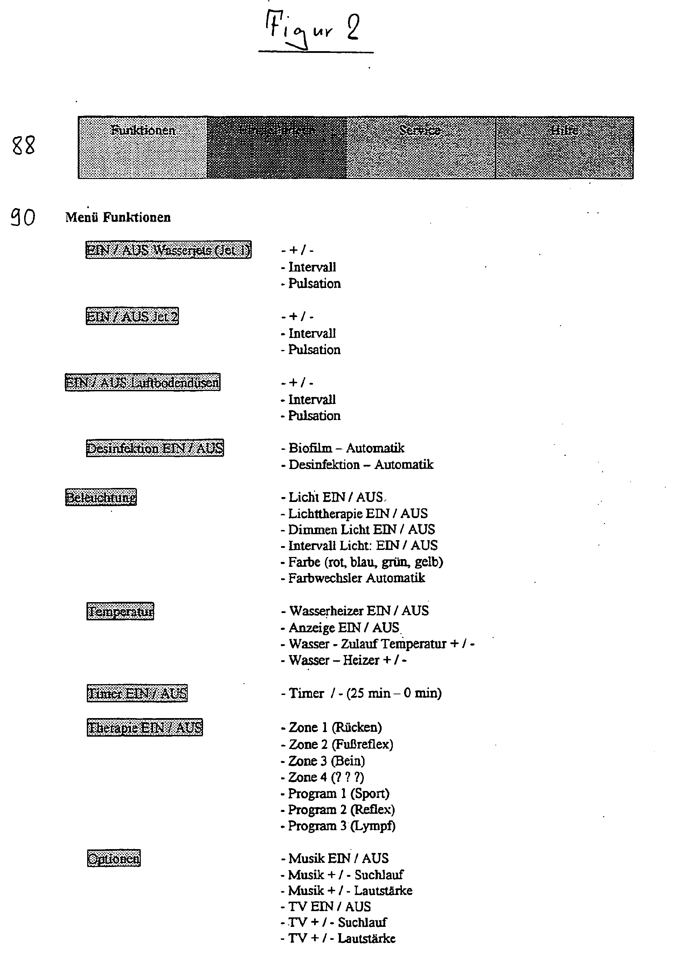

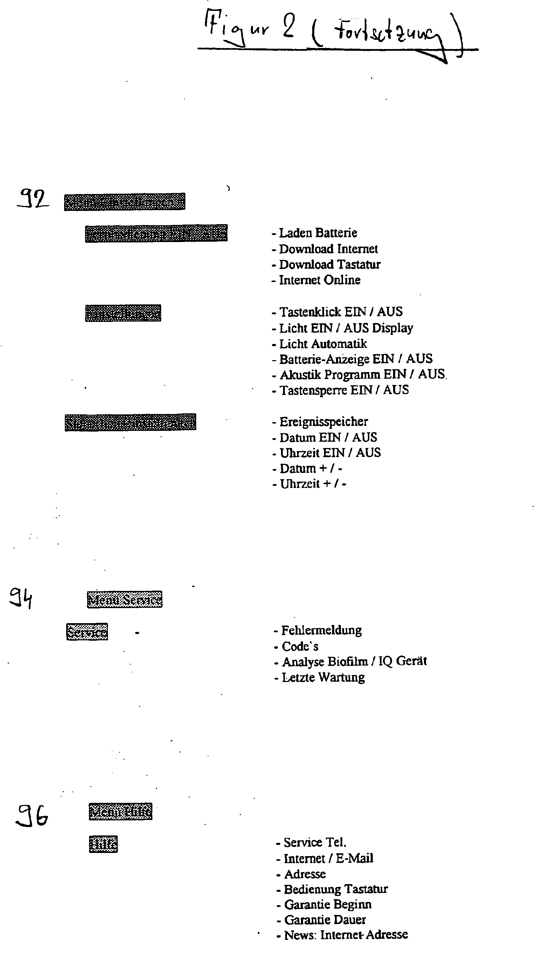

Die Bedieneinheit 64 ist nunmehr derart ausgestaltet, daß sie dem Bediener eine menügeführte Benutzerschnittstelle zum Eingeben der Steuerbefehle bereitstellt, bei der zumindest die einzelnen Antriebsaggregate, deren Steuermöglichkeiten und die zugehörigen Steuerwerte oder aber zumindest einzelne Steuerprogramme (siehe unten) als einzelne Menüpunkte aufgerufen werden können. Dies wird anhand eines speziellen Beispiels mit Bezug auf die Figur 2 näher erläutert, in der einzelne Menüpunkte einer solchen Benutzerschnittstelle sowie deren Bedeutung illustriert sind.

Die menügeführte Benutzerschnittstelle wird durch Einschalten der Bedieneinheit 64 aktiviert. In einer ersten nicht näher dargestellten Menüebene werden verschiedene Benutzer über ihre Namen dargestellt, wobei bei Auswahl eines bestimmten Namens die individuellen Einstellungen für das Whirlpool 2 aufgerufen werden (werkseitig kann beispielsweise eine feste Grundeinstellung programmiert sein, die unter einem festen Namen aufrufbar ist, unter den übrigen variablen Namen können individuelle Einstellungen programmiert werden). In der hierarchisch tiefer angeordneten Menüebene 88 der menügeführten Benutzerschnittstelle stehen dem Bediener vier Menüpunkte zur Verfügung, nämlich "Funktionen", "Einstellungen", "Service" und "Hilfe".

Unter dem Menüpunkt "Funktionen" öffnet sich eine untergeordnete Menüebene 90, in der u.a. einzelne Antriebsaggregate des Whirlpools 2 über zugeordnete Menüpunkte ausgewählt werden können. Im gezeigten Beispiel sind das der Reihe nach ein erster Wasserstrahl "Wasserjets (Jet 1)", ein zweiter Wasserstrahl "Jet 2", Luftbodendüsen, eine Desinfektion, eine Beleuchtung, eine Temperatureinstellung "Temperatur", eine Zeitschaltuhr "Timer", eine Steuerprogrammauswahl "Therapie" und weitere Optionen. Die beiden Wasserjets, die Luftdüsen, die Desinfektion, die Zeitschaltuhr und ein ausgewählttes Steuerprogramm können in dieser Menüebene ein- bzw. ausgeschaltet werden. Dabei kann der Bediener beispielsweise mit den Cursortasten 80 und 86 zwischen den einzelnen Menüpunkten dieser Menüebene 90 hin- und herspringen. Er gelangt beispielsweise vom Menüpunkt "Wasserjets (Jet 1)" durch Betätigen der Taste 86 zum Menüpunkt "Jet 2". Durch wiederholtes Betätigen der Cursortaste 82 schaltet er das zugehörige Antriebsaggregat beispielsweise ein und aus; das heißt durch einmaliges Betätigen wird es eingeschaltet und durch nochmaliges Betätigen wieder ausgeschaltet. Zu jedem Menüpunkt der Menüebene 90 (wie auch der obersten Ebene 88) kann beispielsweise durch Betätigen der Cursortaste 84 in eine hierarchisch untergeordnete Menüebene umgeschaltet werden. Für die Menüpunkte "Wasserjet (Jet 1)", "Jet 2" und "Luftbodendüsen" gelangt man in einer untergeordneten Menüebene zu den drei Menüpunkten "+/-", "Intervall" und "Pulsation". Wird für den Menüpunkt "+/-" die Cursortaste 84 betätigt, gelangt man in eine (in der Fig. 2 nicht dargestellte) Darstellung zur Einstellung der Leistung der zugehörigen Antriebsaggregate. Wie in Fig. 1 schematisch auf der Anzeige des Bildschirms 78 dargestellt, kann dem Benutzer beispielsweise ein Einstellbalken angezeigt werden, den er mit den Cursortasten 80 und 86 von links (0%) nach rechts (100%) verschieben kann und umgekehrt. Hiermit stellt er die Leistung des zugehörigen Antriebsaggregats ein. Die Menüpunkte "Intervall" und "Pulsation" können ggf. eine ähnliche tiefergelegene Menüebene öffnen, in denen die Intervallzeit stufenlos eingestellt werden kann bzw. der Pulsationsrhythmus. Unter dem Menüpunkt "Desinfektion" der Menüebene 90 hat der Bediener beispielsweise die Auswahl einer Biofilmdesinfektion und einer normalen Desinfektion. Unter dem Menüpunkt "Beleuchtung" kann er das Licht ein- und ausschalten, ein vorgegebenes Lichttherapieprogramm ein- und ausschalten, das Licht stufenlos dimmen, eine Lichtintervallschaltung ein- und ausschalten, explizit die Farbe von Mehrfarbenleuchten auswählen oder ein automatisches Farbwechslerprogramm starten. Unter dem Menüpunkt "Temperatur" kann er die Wasserheizung ein- und ausschalten, angeben, ob er auf dem Bildschirm 78 die aktuelle Wassertemperatur angezeigt bekommen möchte, die Wasserzulauftemperatur stufenlos einstellen, und eine Wasserheizung stufenlos einstellen. Unter dem Menüpunkt "Timer" kann er die Zeitdauer des Whirlpoolbetriebs über eine Zeitschaltuhr stufenlos vorgeben (z.B. die Zeitdauer für ein ausgewähltes Steuerprogramm). Mit dem Menüpunkt "Therapie" kann er unterschiedliche Steuerprogramme auswählen, welche die Antriebsaggregate des Whirlpools 2 über die vorgegebene Zeitdauer beispielsweise hinsichtlich therapeutischer oder sonstiger Kriterien ansteuern. Die wird kurz an einem speziellen Beispiel erläutert: Stehen beispielsweise für den Rückenbereich mehrere Wasserdüsen zur Verfügung, so kann durch entsprechendes Öffnen und Schließen der zugehörigen Magnetventile zu diesen Wasserdüsen eine Art Massagestrahl erzeugt werden, der unten an der Wirbelsäule beginnt und in Richtung zum Halswirbel läuft (dieser laufende Massagestrahl kann eine vorgegebene Anzahl oft wiederholt werden und dabei auch seine Richtung ändern). Abwechselnd mit dem Rückenmassagestrahl können zur Rückenentspannung Luftdüsen im Rükkenbereich eingeschalten werden. Nach einer bestimmten Zeit kann eine Aromatherapie durch Zerstäuben von ausgewählten Aromaölen sowie parallel eine Lichttherapie mit einer bestimmten Farbabfolge der Lichtes zugeschaltet werden. Ein Steuerprogramm ist also allgemein die Kombination verschiedener Funktionen (Intervallsteuerung, Zeitdauersteuerug, etc.) von verschiedenen Antriebsaggregaten (luftdüsen, Wasserdüsen, Leuchten, etc.). Wie aus dem kurzen Beispiel ersichtlich wird, ist der konkreten Gestaltung solcher Steuerprogramme keine Grenzen gesetzt.

Ein bestimmtes Bedienteil 64 kann dabei eine fest vorgegebene Anzahl solcher Steuerprogramme gespeichert haben. So kann beispielsweise eine einfachere Ausführung dieser Bedieneinheit 64 nur einige wenige Steuerprogramme enthalten, während eine luxuriösere Ausführung eine größere Anzahl enthält. Der Bediener kann durch Auswechseln der Bedieneinheit 64 (ohne irgendwelche sonstigen Änderungen an der Leistungseinheit 24 oder dem Whirlpool 2) somit zusätzliche Steuerprogrammfunktionen hinzufügen. Ferner kann die Bedieneinheit 64 auch an eine spezielle (in der Figur 1 nicht dargestellte) Ladestation angekoppelt werden, die mit einem beispielsweise internetfähigen Computer verbunden ist. Der Bediener kann sich dann über das Internet oder über mobile Speicher (CDs, Disks, etc.) Steuerprogramme mittels der Ladestation in die Bedieneinheit 64 laden. Hierzu verwendet die Bedieneinheit 64 denselben Datenempfänger 76 und Datensender 74 wie für die Übertragung der Steuerbefehle an die Leistungseinheit 24. Das Ladeteil kann ebenso einen Energiesender enthalten, mit dem er die Bedieneinheit 64 im aufgesteckten Zustand auf die Ladestation mit Energie versorgt. Dies ist vor allem für solche Bedieneinheiten nützlich, die keinen eingebauten Akkumulator 70 haben. Über eine solche Ladestation können auch weitere Updates für den Funktionsumfang des Whirlpools 2 eingeladen werden, wie Desinfektionsprogramme, externe Servicefunktionen, etc. Auch Spiele oder sonstige Unterhaltungsprogramme können in die Bedieneinheit 64 eingeladen werden, die auf dem Bildschirm 78 ablaufen und über die Tastatur 80-86 bedient werden und dem Bediener Zeitvertreib im Whirlpool 2 bieten. Zusätzlich kann die Bedieneinheit 64 auch so ausgestaltet sein, daß sie das eigene Programmieren von Steuerprogrammen ermöglicht.

Unter dem Menüpunkt "Einstellungen" der obersten Menüebene 88 öffnet sich eine weitere Menüebene 92, welche die Menüpunkte "Fernbedienung", "Einstellungen" und "Sicherheitseinstellungen" umfaßt. Unter dem Menüpunkt "Fernbedienung" kann das Laden des Akkumulators 70 ein- und ausgeschaltet werden, kann die grundsätzliche Bereitschaft der Bedieneinheit 64 zum Laden von Programmen über die Ladestation ein- und ausgeschaltet werden (zum anschließenden Herunterladen von Programmen wird die Bedieneinheit 64 beispielsweise einfach auf einen entsprechenden Aufnahmedorn der Ladestation aufgesteckt, woraufhin letztere der Bedieneinheit 64 das ausgewählte Steuerprogramm automatisch überträgt), kann das Herunterladen über eine Rechnertastatur ein- und ausgeschaltet werden, und kann das Internet ein- und ausgeschaltet werden. Unter dem Menüpunkt "Einstellungen" kann eine akustische Bestätigung bei Betätigen der Cursortasten 84-86 ein- und ausgeschaltet werden ("Tastenklick") kann eine Hintergrundbeleuchtung für den Bildschirm 78 ein- und ausgeschaltet werden ("Licht EIN/AUS"), kann eine automatische Abschaltung dieser Hintergrundbeleuchtung nach vorgegebener Zeit ein- und ausgeschaltet werden, kann die Anzeige des Ladezustandes des Akkumulators 70 auf dem Bildschirm 78 ein- und ausgeschaltet werden, kann ein Akustikprogramm und/oder eine Bildanzeige ein- und ausgeschaltet werden (z.B. ein Musikgerät, wie CD-Spieler, Radio, oder eine Bildanzeige, wie Fernseher, Videorecorder, Diaprojektor, Beamer, ein- und ausschalten bzw. bedienen) und entsprechend eine Tastensperre. Unter dem Menüpunkt "Sicherheitseinstellungen" können eine Datum- und/oder Uhrzeitanzeige ein- und ausgeschaltet und entsprechend eingestellt werden.

Unter dem Menüpunkt "Menüservice" der Menüebene 88 öffnet sich eine weitere Menüebene 94 mit dem Menüpunkt "Service", in dem bei einer Störung der gesamten Anlage eine Fehlermeldung unter einem eigenen Menüpunkt ausgegeben wird, ein zugehöriger Fehlercode unter einem weiteren Menüpunkt ausgegeben wird, die Analyseergebnisse des Biofilms bei der Desinfektion angezeigt werden und der Zeitpunkt der letzten Wartung unter einem weiteren Menüpunkt angegeben wird.

Unter dem Menüpunkt "Hilfe" der obersten Menüebene 88 öffnet sich eine weitere Menüebene 96 mit dem einzigen Menüpunkt "Hilfe", das die in der Fig. 2 angegebene Information unter den verschiedenen Menüpunkten liefert. Selbstverständlich ist die obige Einteilung der menügeführten Benutzerschnittstelle in die einzelnen Menüpunkte lediglich beispielhaft. So können weitere Menüebenen und Menüpunkte vorgesehen werden oder die bestehende Einteilung verändert werden. Beispielsweise kann mit der Bedieneinheit 64 auch eine Stereoanlage bedient werden. Hierzu kann in der Menüebene 88 noch ein Menüpunkt "Audio" vorgesehen sein, bei dessen Aufruf weitere Menüpunkte einer weiteren Menüebene zur Steuerung einer handelsüblichen Stereoanlage zur Auswahl stehen. Hierzu kann ferner ein separater Funksignal/Infrarotsignal-Wandler vorgesehen werden. Dieser Wandler wird in der Nähe (in Sichtkontakt mit) der Stereoanlage aufgestellt und empfängt die von der Bedieneinheit 64 gesendeten Steuersignale zum Fernbedienen der Stereoanlage, wandelt diese in die für die Stereoanlage verständlichen Infrarotsignale um und sendet die letzteren an die Stereoanlage. Die einzelnen Menüpunkte der Benutzerschnittstelle können z.B. das Ein/Ausschalten, das Einstellen der Lautstärke, das Aktivieren eines Sendersuchlauf, die Funktion "CD-Play/Stop", die Auswahl eines CD-Tracks, etc. umfassen.

Die Menüführung der Benutzerschnittstelle kann auch selbstlernend sein. So kann sie die Häufigkeit der Auswahl bestimmter Menüpunkte erfassen und die Anzeige der Menüpunkte innerhalb ihrer zugehörigen Menüebene entsprechend anpassen (z.B. können die häufiger angewählten Menüpunkte direkt an den Anfang einer Menüebene gestellt werden).

Der Bildschirm 78 und die Eingabetasten 80-86 können auch in eine Touchscreen integriert sein. Anstelle der Eingabetasten 80-86 kann auch ein einzelner Dreh-/Drückknopf vorgesehen sein, mit dem durch Drehen die einzelnen Menüpunkte durchlaufen werden und durch Drücken der gerade angezeigte Menüpunkt ausgewählt wird. Selbstverständlich kann auch eine akustische Benutzerschnittstelle vorgesehen sein, die akustische Befehle (Spracherkennung, etc.) entgegennimmt und ihre Information akustisch ausgibt (Sprachausgabe, etc.).

Der Installateur einer solchen Whirlpoolanlage muß das System zu Beginn programmieren, indem er beispielsweise der Steuerung mitteilt, welche Antriebsaggregate an welchem Steuermittel angeschlossen sind. Die Drehzahlregler 34, 40 und 46 müssen beispielsweise eine unterschiedliche Mindestleistung liefern, abhängig vom angeschlossenen Antriebsaggregat. Ist das Antriebsaggregat eine Luftpumpe 12, die wie in Fig. 1 dargestellt eine Heizung zum Erwärmen der Luft auf Körpertemperatur umfaßt, so muß das zugehörige Steuermittel 34 eine erhöhte Mindestleistung zu dessen Betrieb abgeben, als sie beispielsweise für eine reine Wasserpumpe abgeben muß. Diesen Installateurprogrammiermodus erreicht man beispielsweise nur durch Eingabe eines PIN-Codes, so daß eine Zerstörung der Anlage durch unsachgemäße Programmierung vermieden wird.

Der Benutzer kann weiterhin auswählen, in welcher Darstellung die Bedieneinheit 64 die menügeführte Benutzerschnittstelle anzeigt. Für technisch weniger versierte Bediener kann beispielsweise eine niedrige Verschachtelungstiefe der Menüebenen eingestellt werden, bei der lediglich eine Menüebene angezeigt wird, die all die in der Fig. 2 gezeigten Menüpunkte der Menüebene 90 in einer Ebene enthält. Das heißt, daß die einzelnen Antriebsaggregate, deren Steuermöglichkeiten (Intervall/Pulsation/Leistung) und deren Steuerwerte in einer einzigen Menüebene angezeigt werden.

Bei Auswahl eines speziellen Steuerprogramms schickt die Bedieneinheit 64 das komplette Steuerprogramm zu Beginn vollständig an die Leistungseinheit 24, die es in einem zugehörigen Speicher abspeichert. Startet der Bediener anschließend mit der Bedieneinheit 64 den Ablauf dieses Steuerprogramms, so sendet die Leistungseinheit 24 ggf. Mitteilung über die verschiedenen momentanen Ablaufzustände des Steuerprogramms an die Bedieneinheit 64, die diese auf dem Bildschirm 78 anzeigt. So kann beispielsweise angezeigt werden, daß nun die Aromatherapie gestartet ist, die Lichttherapie gestartet ist, die Fußreflexmassage gestartet ist, etc. Damit wird der Bediener immer über den momentanen Ablaufzustand des gesamten Steuerprogramms informiert.

Zudem kann die Bedieneinheit 64 die Betriebshistorie des gesamten Whirlpools 2 speichern. Der Benutzer kann dann bei Fehlfunktionen des Whirlpools 2 allein mit der Bedieneinheit 64 zu einem Fachhändler gehen, wo die Betriebshistorie ausgelesen wird und das Fachpersonal eine entsprechende Diagnose stellen kann. Eine Serviceperson kann auch vor Ort eine eigene Dockingstation an die Bedieneinheit 64 anschließen, die Betriebshistorie auslesen und eine entsprechende Diagnose erstellen lassen. Schließlich kann auch mit der erwähnten Ladestation zum Laden von Daten in die Bedieneinheit 64 die Betriebshistorie ausgelesen werden und über ein Netzwerk (Internet, etc.) direkt an den Hersteller des Whirlpools 2 zu Diagnosezwecken gesendet werden. Hierzu kann beispielsweise die Leistungseinheit 24 Diagnosedaten (wie Betriebszeit seit der letzten Wartung jedes einzelnen Antriebsaggregats und/oder der gesamten Anlage, Störungsmeldungen von einzelnen Antriebsaggregaten) über die einzelnen Antriebsaggregate sammeln und an die Bedieneinheit 64 übersenden. Alternativ kann die Betriebshistorie auch direkt aus der Leistungseinheit 24 ausgelesen werden. Zudem kann die Betriebshistorie auch direkt in der Bedieneinheit 64 erstellt und gespeichert werden. In allen Fällen können über die Bedieneinheit 64 auch dem Benutzer zum Beispiel automatisch Serviceintervalle angezeigt werden (z.B. zeigt die Bedieneinheit 64 nach einer vorgegebenen Gesamtbetriebszeit des Whirlpools 2 dem Benutzer an, daß ein nächster Service durchgeführt werden sollte, etc.). Darüber hinaus können die Einschaltzeiten aller Pumpen aufsummiert werden, wobei bei Überschreiten einer voreingestellten Zeit dem Bediener über die Bedieneinheit 64 eine Information ausgegeben wird, damit dieser eine Desinfektion des Whirlpools 2 durchführt bzw. automatisch von der Leistungseinheit 24 durchführen läßt.

Der Prozessor in der Leistungseinheit 24 kann über eine entsprechende Programmrealisierung ein Energiemanagement durchführen. Dabei addiert er die Stromverbräuche aller eingeschalteten Verbraucher (Antriebsaggregate) und vergleicht sie mit einem zulässigen maximalen Stromverbrauch. Wird letzterer Wert überschritten, verhindert die Leistungseinheit 24 beispielsweise das Einschalten weiterer Antriebsaggregate und/oder regelt den Stromverbrauch bereits eingeschalteter Antriebsaggregate zurück (mit entsprechender Rückmeldung über die Bedieneinheit 64 an den Bediener). Die Bedieneinheit 64 kann ferner derart ausgestaltet sein, daß sie mit mehreren Leistungseinheiten 24 unterschiedlicher Wellness-Einrichtungen zusammenarbeiten kann. So kann beispielsweise mit einer Bedieneinheit 64 das Whirlpool 2, die Dampfdusche, die Farblicht-Therapie-Anlage und ggf. auch die Stereoanlage gesteuert werden. Hierzu kann eine Bedieneinheit 64 ggf. mehrere Funktionsgruppen adressieren, die auch räumlich getrennt voneinander installiert werden können. Zum Beispiel kann mit der Bedieneinheit 64 die Leistungseinheit 24 beim Whirlpool 2 über eine erste Adresse, der Funksignal/Infrarotsignal-Wandler bei der Stereoanlage über eine zweite Adresse, die Farblichtanlage an der Raumdecke über dem Whirlpool 2 über eine dritte Adresse und die Farblichtanlage am Whirlpoolrand über eine vierte Adresse per Funk angesprochen werden. Dies erspart vorteilhaft eine Verkabelung der genannten Funktionsgruppen (insbesondere der Farblichtanlage an der Raumdecke und des Funksignal/Infrarotsignal-Wandlers) miteinander. Diese Funktionsgruppen weisen für die drahtlose Adressierung einen entsprechen Empfänger und Dekoder auf.

## Patentansprüche

1. Steuerungssystem für eine Wellness-Einrichtung (2), wie ein Whirlpool, eine Sauna, eine Dampfdusche, zum Steuern einer Vielzahl von Antriebsaggregaten (6; 8; 12-16; 20; 26-30), wie Pumpen, Ventile, der Wellness-Einrichtung (2), mit:
- einer Leistungseinheit (24) mit einer Vielzahl von Steuermitteln (34-52), die mit den Antriebsaggregaten (6; 8; 12-16; 20; 26-30) koppelbar sind und diese über elektrische Steuersignale steuerbar sind, und
- einer Bedieneinheit (64) mit einem Eingabemittel (80-86) und einem Ausgabemittel (78), wobei das Ein- und das Ausgabemittel (78-86) eine Benutzerschnittstelle zum Eingeben von Steuerbefehlen zur Steuerung der Antriebsaggregate (6; 8; 12-16; 20; 26-30) bilden,
- wobei die Leistungseinheit (24) und die Bedieneinheit (64) als zwei separate Einheiten mit jeweils eigenem Gehäuse ausgebildet sind und über eine Schnittstelle (58; 60; 74; 76) zur Übertragung der Steuerbefehle von der Bedieneinheit (64) zur Leistungseinheit (24) miteinander kommunizieren,
- wobei die Bedieneinheit (64) eine menügeführte Benutzerschnittstelle zum Eingeben der Steuerbefehle bildet, bei der die einzelnen Antriebsaggregate (6; 8; 12-16; 20; 26-30), deren Steuermöglichkeiten und die zugehörigen Steuerwerte als einzelne Menüpunkte aufgerufen werden können,
**dadurch gekennzeichnet, daß** die Benutzerschnittstelle selbstlernend derart ausgestaltet ist, daß die Häufigkeit der Auswahl bestimmter Menüpunkte erfaßt wird und häufig aufgerufene Menüpunkte an den Anfang einer Menüebene gestellt werden.

2. Steuerungssystem nach Anspruch 1, bei dem das Ausgabemittel (78) eine Bildschirmanzeige und das Eingabemittel (80-86) Eingabetasten sind.

3. Steuerungssystem nach Anspruch 1 oder 2, bei dem die Menüführung der Benutzerschnittstelle die einzelnen Antriebsaggregate (6; 8; 12-16; 20; 26-30) als Menüpunkte einer ersten Menüebene (90) umfaßt.

4. Steuerungssystem nach Anspruch 3, bei dem die Menüführung auch die verschiedenen Steuermöglichkeiten und die zugehörigen Steuerwerte der einzelnen Antriebsaggregate (6; 8; 12-16; 20; 26-30) als Menüpunkte der ersten Menüebene (90) umfaßt.

5. Steuerungssystem nach Anspruch 3, bei dem die Menüführung die verschiedenen Steuermöglichkeiten der einzelnen Antriebsaggregate (6; 8; 12-16; 20; 26-30) als Menüpunkte einer zweiten Menüeebene umfaßt, die der ersten Menüebene untergeordnet ist.

6. Steuerungssystem nach Anspruch 5, bei dem die Menüführung die verschiedenen Steuerwerte der einzelnen Antriebsaggregate (6; 8; 12-16; 20; 26-30) als Menüpunkte einer dritten Menüeebene umfaßt, die der zweiten Menüebene untergeordnet ist.

7. Steuerungssystem nach Anspruch 4 und 5 oder 6, bei dem die Menüführung zwischen den beiden Darstellungen der Antriebsaggregate (6; 8; 12-16; 20; 26-30), ihrer Steuermöglichkeiten und der zugehörigen Steuerwerte einerseits als Menüpunkte nur der ersten Menüebene (90) und andererseits als Menüpunkte mehrerer hierarchisch geordneter Menüebenen (90) umschaltbar ist.

8. Steuerungssystem nach einem der vorhergehenden Ansprüche, bei dem die Antriebsaggregate (6; 8; 12-16; 20; 26-30) Magnetventile (6; 8; 14; 16; 26; 28) umfassen und die Leistungseinheit (24) elektrische Steuermittel (34-52) für die Magnetventile (6; 8; 12-16; 18; 26; 28) umfaßt, die im Niederspannungsbereich arbeiten.

9. Steuerungssystem nach einem der vorhergehenden Ansprüche, bei dem die Leistungseinheit (24) ein Energiesendemittel (56) und die Bedieneinheit (64) ein Energieempfangsmittel (66) umfaßt, wobei das Energiesendemittel (56) dem Energieempfangsmittel (66) elektrische Energie zur elektrischen Energieversorgung der Bedieneinheit (64) drahtlos überträgt.

10. Steuerungssystem nach Anspruch 9, bei dem die Bedieneinheit (64) einen Akkumulator (70) zum Speichern von elektrischer Energie sowie ein mit dem Energieempfangsmittel (66) und dem Akkumulator (70) gekoppeltes Lademittel (68) zum Aufladen des Akkumulators (70) mit der übertragenen Energie umfaßt.

11. Steuerungssystem nach einem der vorhergehenden Ansprüche, bei dem die Bedieneinheit (64) ein Kopplungsmittel umfaßt, über das die Bedieneinheit (64) mit einem zugehörigen Kopplungsmittel der Leistungseinheit (24) mechanisch lösbar gekoppelt werden kann.

12. Steuerungssystem nach einem der vorhergehenden Ansprüche, bei dem die Bedieneinheit (64) einen Programmspeicher zum Speichern von Steuerprogrammen zur Steuerung der Wellness-Einrichtung (2) aufweist und die Schnittstelle (74; 76) der Bedieneinheit (64) derart ausgestaltet ist, daß sie ferner mit einer externen Schnittstelle zum Einladen von Steuerprogrammen in den Programmspeicher kommunizieren kann.

13. Steuerungssystem nach Anspruch 12, soweit rückbezogen auf Anspruch 11, bei dem die externe Schnittstelle in einer externen Ladestation enthalten ist, die ein Kopplungsmittel aufweist, das mit der Bedieneinheit (64) über deren Kopplungsmittel mechanisch lösbar gekoppelt werden kann, wobei die externe Schnittstelle und die Schnittstelle der Bedieneinheit (64) im wesentlichen nur im mechanisch miteinander gekoppelten Zustand von Bedieneinheit (64) und Ladestation miteinander kommunizieren.

14. Steuerungssystem nach einem der vorhergehenden Ansprüche, bei dem die Schnittstelle (58; 60; 74; 76) derart ausgestaltet ist, daß sie die Steuerbefehle und/oder die Steuerprogramme per Funkwellen überträgt.

15. Steuerungssystem nach einem der vorhergehenden Ansprüche, bei dem die Leistungseinheit (24) ein Grundmodul (22) mit einer Vielzahl von Steuermitteln (34-44) zum Steuern der Antriebsaggregate (6; 8; 12-16; 20) der Wellness-Einrichtung (2) umfaßt, das mit einem Ausbaumodul (32) koppelbar ist, das eine weitere Vielzahl an Steuermitteln (46-52) zum Steuern weiterer Antriebsaggregate (26-30) der Wellness-Einrichtung (2) umfaßt.

16. Steuerungssystem nach Anspruch 15, bei dem das Grundmodul (22) über ein Bussystem (62) mit dem Ausbaumodul (32) koppelbar ist, über das es die von der Bedieneinheit (64) empfangenen Steuerbefehle an das Ausbaumodul (32) überträgt.

17. Steuerungssystem nach einem der vorhergehenden Ansprüche, bei dem die Benutzerschnittstelle der Bedieneinheit (64) verschiedene Steuerprogramme für die Steuerung der Wellness-Einrichtung (2) als Menüpunkte einer Menüebene umfaßt.

18. Steuerungssystem nach Anspruch 17, bei dem das Ausgabemittel (78) der Bedieneinheit (64) während des Ablaufs eines Steuerprogramms den momentanen Steuerzustand der Wellness-Einrichtung (2) ausgibt.

19. Steuerungssystem nach einem der vorhergehenden Ansprüche, bei dem eine Betriebshistorie der Wellness-Einrichtung (2) erfaßt und gespeichert wird.

20. Steuerungssystem nach einem der vorhergehenden Ansprüche, bei dem die Benutzerschnittstelle einen Programmiermodus als Menüpunkt umfaßt, in dem ein Programmierer bei Installation der Wellness-Einrichtung (2) Grundeinstellungen für die Steuerung der einzelnen Antriebsaggregate (6; 8; 12-16; 20; 26-30) eingeben kann.

21. Steuerungssystem nach Anspruch 20, bei dem der Zugang in den Programmiermodus kodiergeschützt ist.

22. Steuerverfahren für eine Wellness-Einrichtung (2), wie ein Whirlpool, eine Sauna, eine Dampfdusche, zum Steuern einer Vielzahl von Antriebsaggregaten (6; 8; 12-16; 20; 26-30), wie Pumpen, Ventile, der Wellness-Einrichtung (2), bei dem:
- die Antriebsaggregate (6; 8; 12-16; 20; 26-30) von einer Leistungseinheit (24) mit einer Vielzahl von Steuermitteln (34-52), die mit den Antriebsaggregaten (6; 8; 12-16; 20; 26-30) koppelbar sind, über elektrische Steuersignale steuerbar sind, und
- Steuerbefehle zur Steuerung der Antriebsaggregate (6; 8; 12-16; 20; 26-30) von einer Bedieneinheit (64) mit einem Eingabemittel (80-86) und einem Ausgabemittel (78) eingegeben werden, wobei das Ein- (80-86) und das Ausgabemittel (78) eine Benutzerschnittstelle bilden,
- wobei die Leistungseinheit (24) und die Bedieneinheit (64) als zwei separate Einheiten mit jeweils eigenem Gehäuse ausgebildet sind und über eine Schnittstelle (58; 60; 74; 76) zur Übertragung der Steuerbefehle von der Bedieneinheit (64) zur Leistungseinheit (24) miteinander kommunizieren,
- wobei die Steuerbefehle über eine menügeführte Benutzerschnittstelle eingegeben werden, bei der die einzelnen Antriebsaggregate (6; 8; 12-16; 20; 26-30), deren Steuermöglichkeiten und die zugehörigen Steuerwerte als einzelne Menüpunkte aufgerufen werden können,
**dadurch gekennzeichnet, daß** die Benutzerschnittstelle selbstlernend derart ist, daß die Häufigkeit der Auswahl bestimmter Menüpunkte erfaßt wird und häufiger aufgerufene Menüpunkte an den Anfang einer Menüebene gestellt werden.

23. Steuerverfahren nach Anspruch 22, bei dem die Menüführung der Benutzerschnittstelle die einzelnen Antriebsaggregate (6; 8; 12-16; 20; 26-30) als Menüpunkte einer ersten Menüebene (90) umfaßt.

24. Steuerverfahren nach Anspruch 23, bei dem die Menüführung auch die verschiedenen Steuermöglichkeiten und die zugehörigen Steuerwerte der einzelnen Antriebsaggregate (6; 8; 12-16; 20; 26-30) als Menüpunkte der ersten Menüebene (90) umfaßt.

25. Steuerverfahren nach Anspruch 23, bei dem die Menüführung die verschiedenen Steuermöglichkeiten der einzelnen Antriebsaggregate (6; 8; 12-16; 20; 26-30) als Menüpunkte einer zweiten Menüeebene umfaßt, die der ersten Menüebene untergeordnet ist.

26. Steuerverfahren nach Anspruch 25, bei dem die Menüführung die verschiedenen Steuerwerte der einzelnen Antriebsaggregate (6; 8; 12-16; 20; 26-30) als Menüpunkte einer dritten Menüeebene umfaßt, die der zweiten Menüebene untergeordnet ist.

27. Steuerverfahren nach Anspruch 24 und 25 oder 26, bei dem die Menüführung zwischen den beiden Darstellungen der Antriebsaggregate (6; 8; 12-16; 20; 26-30), ihrer Steuermöglichkeiten und der zugehörigen Steuerwerte einerseits als Menüpunkte nur der ersten Menüebene (90) und andererseits als Menüpunkte mehrerer hierarchisch geordneter Menüebenen (90) umgeschaltet werden kann.

28. Steuerverfahren nach einem der Ansprüche 22 bis 27, bei dem die Leistungseinheit (24) der Bedieneinheit (64) elektrische Energie zur elektrischen Energieversorgung der Bedieneinheit (64) drahtlos überträgt.

29. Steuerverfahren nach einem der Ansprüche 22 bis 28, bei dem Steuerprogramme zur Steuerung der Wellness-Einrichtung (2) über die Schnittstelle (74; 76) der Bedieneinheit (64) von einer externen Schnittstelle eingeladen werden können.

30. Steuerverfahren nach einem der Ansprüche 22 bis 29, bei dem die Steuerbefehle und/oder die Programmdaten per Funkwellen übertragen werden.

31. Steuerverfahren nach einem der Ansprüche 22 bis 30, bei dem die Benutzerschnittstelle der Bedieneinheit verschiedene Steuerprogramme für die Steuerung der Wellness-Einrichtung (2) als Menüpunkte umfaßt.

32. Steuerverfahren nach Anspruch 31, bei dem ein vom Bediener ausgewähltes Steuerprogramm an die Leistungseinheit (24) übertragen wird und dort nach Übertragung eines Startsignals abläuft.

33. Steuerverfahren nach Anspruch 31 oder 32, bei dem von der Bedieneinheit (64) der momentane Steuerzustand der Wellness-Einrichtung (2) während des Ablaufs eines Steuerprogramms ausgegeben wird.

34. Steuerverfahren nach einem der Ansprüche 22 bis 33, bei dem die Benutzerschnittstelle einen Programmiermodus als Menüpunkt umfaßt, in dem ein Programmierer bei Installation der Wellness-Einrichtung (2) Grundeinstellungen für die Steuerung der einzelnen Antriebsaggregate (6; 8; 12-16; 20; 26-30) eingeben kann.

35. Steuerverfahren nach Anspruch 34, bei dem der Zugang in den Programmiermodus kodiergeschützt ist.

36. Steuerverfahren nach einem der Ansprüche 22 bis 35, bei dem eine Betriebshistorie der Wellness-Einrichtung (2) erfaßt und gespeichert wird.

## Claims

1. A control system for spa equipment (2), such as a spa bath, a sauna, a steam shower, for controlling a plurality of drive units (6; 8; 12-16, 20; 26-30), such as pumps and valves, of the spa equipment (2), comprising:
- a power unit (24) with a plurality of control means (34-52), which can be coupled with the drive units (6; 8; 12-16; 20; 26-30) and these drive units can be controlled via electric control signals, and
- a control unit (64) with an input means (80-86) and an output means (78), with the input and the output means (78-86) forming a user interface for inputting control commands for controlling the drive units (6; 8; 12-16; 20; 26-30),
- wherein the power unit (24) and the control unit (64) are designed as two separate units each having its own housing and which communicate with each other via an interface (58; 60; 74; 76) for transmitting the control commands from the control unit (64) to the power unit (24),
- wherein the control unit (64) forms a menu-driven user interface for inputting the control commands, in which the individual drive units (6; 8; 12-16; 20; 26-30), their control options and the associated control values can be invoked as individual menu items,
**characterised in that** the user interface has a self-learning configuration such that the frequency of the selection of specific menu items is recorded and frequently invoked menu items are placed at the start of a menu level.

2. A control system according to Claim 1,
in which the output means (78) is a screen display and the input means (80-86) are input keys.

3. A control system according to Claim 1 or 2,
in which the menu mode of the user interface includes the individual drive units (6; 8; 12-16; 20; 26-30) as menu items of a first menu level (90).

4. A control system according to Claim 3,
in which the menu mode also includes the various control options and the associated control values of the individual drive units (6; 8; 12-16; 20; 26-30) a menu items of the first menu level (90).

5. A control system according to Claim 3,
in which the menu mode includes the various control options of the individual drive units (6; 8; 12-16; 20; 26-30) as menu items of a second menu level subordinate to the first menu level.

6. A control system according to Claim 5,
in which the menu mode includes the various control values of the individual drive units (6; 8; 12-16; 20; 26-30) as menu items of a third menu level subordinate to the second menu level.

7. A control system according to Claim 4 and 5 or 6,
in which the menu mode can be switched between the two representations of the drive units (6; 8; 12-16; 20; 26-30), their control options and the associated control values on the one hand as menu items only of the first menu level (90) and on the other hand as menu items of several hierarchically ordered menu levels (90).

8. A control system according to one of the preceding Claims,
in which the drive units (6; 8; 12-16; 20; 26-30) include magnetic values (6; 8; 14; 16; 26; 28) and the power unit (24) includes electrical control means (34-52) for the magnetic values (6; 8; 12-16; 18; 26; 28) that operate in the low-voltage range.

9. A control system according to one of the preceding Claims,
in which the power unit (24) includes an energy transmission means (56) and the control unit (64) includes an energy receiving means (66), the energy transmission means (56) wirelessly transmitting electric energy to the energy receiving means (66) for supplying the control unit (64) with electric energy.

10. A control system according to Claim 9,
in which the control unit (64) includes an accumulator (70) for storing electric energy as well as a charging means (68) coupled with the energy receiving means (66) and the accumulator (70) for charging the accumulator (70) with the transmitted energy.

11. A control system according to one of the preceding Claims,
in which the control unit (64) includes a coupling means via which the control unit (64) can be coupled with an associated coupling means of the power unit (24) in a mechanically detachable manner.

12. A control system according to one of the preceding Claims,
in which the control unit (64) comprises a program memory for storing control programs for controlling the spa equipment (2) and the interface (74; 76) of the control unit (64) is configured such that it can also communicate with an external interface for loading control programs into the program memory.

13. A control system according to Claim 12, generally referred back to Claim 11,
in which the external interface is contained in an external charging station comprising a coupling means that can be coupled to the control unit (64) in a mechanically detachable manner, with the external interface and the interface of the control unit (64) communicating with each other substantially only when the control unit (64) and loading station are mechanically coupled to each other.

14. A control system according to one of the preceding Claims,
in which the interface (58; 60; 74; 76) is configured such that it transmits the control commands and/or the control programs by radio waves.

15. A control system according to one of the preceding Claims,
in which the power unit (24) includes a basic module (22) with a plurality of control means (34-44) for controlling the drive units (6; 8; 12-16; 20; 26-30) of the spa equipment (2), which can be coupled with an expansion module (32) that includes a further plurality of control means (46-52) for controlling further drive units (26-30) of the spa equipment (2).

16. A control system according to Claim 15,
in which the basic module (22) can be coupled via a bus system (62) to the expansion module (32), via which it transmits the control commands received from the control unit (64) to the expansion module (32).

17. A control system according to one of the preceding Claims,
in which the user interface of the control unit (64) includes various control programs for controlling the spa equipment (2) as menu items of a menu level.

18. A control system according to Claim 17,
in which the output means (78) of the control unit (64) outputs the instantaneous control status of the spa equipment (2) during the sequence of operations of a control program.

19. A control system according to one of the preceding Claims,
in which an operational history of the spa equipment (2) is recorded and stored.

20. A control system according to one of the preceding Claims,
in which the user interface includes a programming mode as a menu item, in which a programmer can input basic settings for controlling the individual drive units (6; 8; 12-16; 20; 26-30) during the installation of the spa equipment (2).

21. A control system according to Claim 20,
in which access to the programming mode is code-protected.

22. A control method for spa equipment (2), such as a spa bath, a sauna, a steam shower, for controlling a plurality of drive units (6; 8; 12-16; 20; 26-30), such as pumps and valves, of the spa equipment (2),
in which:
- the drive units (6; 8; 12-16; 20; 26-30) can be controlled via electric control signals by a power unit (24) with a plurality of control means (34-52) that can be coupled to the drive units (6; 8; 12-16; 20; 26-30), and
- control commands for controlling the drive units (6; 8; 12-16; 20; 26-30) are inputted by a control unit (64) with an input means (80-86) and an output means (78), the input means (80-86) and the output means (78) forming a user interface,
- wherein the power unit (24) and the control unit (64) are designed as two separate units each having its own housing and which communicate with each other via an interface (58; 60; 74; 76) for transmitting the control commands from the control unit (64) to the power unit (24),
- wherein the control commands are inputted via a menu-driven user interface, in which the individual drive units (6; 8; 12-16; 20; 26-30), their control options and the associated control values can be invoked as individual menu items,
**characterised in that** the user interface is self-learning such that the frequency of the selection of specific menu items is recorded and more frequently invoked menu items are placed at the start of a menu level.

23. A control method according to Claim 22,
in which the menu mode of the user interface includes the individual drive units (6; 8; 12-16; 20; 26-30) as menu items of a first menu level (90).

24. A control method according to Claim 23,
in which the menu mode also includes the various control options and the associated control values of the individual drive units (6; 8; 12-16; 20; 26-30) as menu items of the first menu level (90).

25. A control method according to Claim 23,
in which the menu mode includes the various control options of the individual drive units (6; 8; 12-16; 20; 26-30) as menu items of a second menu level subordinate to the first menu level.

26. A control method according to Claim 25,
in which the menu mode includes the various control values of the individual control units (6; 8; 12-16; 20; 26-30) as menu items of a third menu level subordinate to the second menu level.

27. A control method according to Claim 24 and 25 or 26,
in which the menu mode can be switched between the two representations of the drive units (6; 8; 12-16; 20; 26-30), their control options and the associated control values on the one hand as menu items only of the first menu level (90) and on the other hand as menu items of several hierarchically ordered menu levels (90).

28. A control method according to one of Claims 22 to 27,
in which the power unit (24) of the control unit (64) wirelessly transmits electrical energy to supply the control unit (64) with electrical energy.

29. A control method according to one of Claims 22 to 28,
in which control programs for controlling the spa equipment (2) can be loaded via the interface (74; 76) of the control unit (64) from an external interface.

30. A control method according to one of Claims 22 to 29,
in which the control commands and/or the program data are transmitted by radio waves.

31. A control method according to one of Claims 22 to 30,
in which the user interface of the control unit includes various control programs for controlling the spa equipment (2) as menu items.

32. A control method according to Claim 31,
in which a control program selected by the operator is transmitted to the power unit (24) and runs there after a start signal has been transmitted.

33. A control method according to Claim 31 or 32,
in which the instantaneous control state of the spa equipment (2) is outputted during the running of a control program by the control unit (64).

34. A control method according to one of Claims 22 to 33,
in which the user interface includes a programming mode as a menu item, in which a programmer can input basic settings for controlling the individual drive units (6; 8; 12-16; 20; 26-30) during the installation of the spa equipment (2).

35. A control method according to Claim 34,
in which access to the programming mode is code-protected.

36. A control method according to one of Claims 22 to 35,
in which an operating history of the spa equipment (2) is recorded and stored.

## Revendications

1. Système de commande pour un dispositif de bien-être (2), tel qu'un bain à remous, un sauna, une douche de vapeur, destiné à commander plusieurs groupes générateurs de pression (6 ; 8 ; 12-16 ; 20 ; 26-30), tels que des pompes, des soupapes, le dispositif de bien-être (2), comprenant :
◆ une unité de puissance (24) comprenant plusieurs moyens de commande (34-52), pouvant être couplés aux groupes générateurs de pression (6 ; 8 ; 12-16 ; 20 ; 26 30), ces derniers pouvant être commandés par l'intermédiaire de signaux de commande électriques, et
◆ une unité de réglage (64) comprenant un moyen d'entrée (80-86) et un moyen de sortie (78), le moyen d'entrée et le moyen de sortie (78-86) formant une interface utilisateur pour l'entrée d'instructions de commande afin de commander les groupes générateurs de pression (6 ; 8 ; 12-16 ; 20 ; 26-30),
◆ l'unité de puissance (24) et l'unité de réglage (64) étant réalisées sous la forme de deux unités séparées avec respectivement un boîtier individuel et communiquant l'une avec l'autre par l'intermédiaire d'une interface (58 ; 60 ; 74 ; 76) pour la transmission des instructions de commande de l'unité de réglage (64) à l'unité de puissance (24),
◆ l'unité de réglage (64) formant une interface utilisateur guidée par menu, pour l'entrée des instructions de commande, dans le cas de laquelle les groupes générateurs de pression individuels (6 ; 8 ; 12-16 ; 20 ; 26-30), leurs possibilités de commande et les valeurs de commande associées peuvent être appelés en tant qu'options de menu individuelles,
**caractérisé en ce que** l'interface utilisateur est réalisée de manière autoadaptative, de telle sorte que la fréquence du choix de certaines options du menu soit enregistrée et que les options souvent appelées soient placées au début d'un niveau de menu.

2. Système de commande selon la revendication 1, dans le cadre duquel le moyen de sortie (78) et le moyen d'entrée (80-86) sont respectivement un écran d'affichage et des touches d'entrée.

3. Système de commande selon la revendication 1 ou 2, dans le cadre duquel le guidage par menu de l'interface utilisateur comporte les groupes générateurs de pression individuels (6 ; 8 ; 12-16 ; 20 ; 26-30) en tant qu'options de menu d'un premier niveau de menu (90).

4. Système de commande selon la revendication 3, dans le cadre duquel le guidage par menu comporte également les différentes possibilités de commande et les valeurs de commande associées des groupes générateurs de pression individuels (6 ; 8 ; 12-16 ; 20 ; 26-30) en tant qu'options de menu du premier niveau de menu (90).

5. Système de commande selon la revendication 3, dans le cadre duquel le guidage par menu comporte les différentes possibilités de commande des groupes générateurs de pression individuels (6 ; 8 ; 12-16 ; 20 ; 26-30) en tant qu'options de menu d'un deuxième niveau de menu, qui dépend du premier niveau de menu.

6. Système de commande selon la revendication 5, dans le cadre duquel le guidage par menu comporte les différentes valeurs de commande des groupes générateurs de pression individuels (6 ; 8 ; 12-16 ; 20 ; 26-30) en tant qu'options de menu d'un troisième niveau de menu, qui dépend du deuxième niveau de menu.

7. Système de commande selon les revendications 4 et 5 ou 6, dans le cadre duquel le guidage par menu entre les deux représentations des groupes générateurs de pression (6 ; 8 ; 12-16 ; 20 ; 26-30), de leurs possibilités de commande et des valeurs de commande associées peut être commuté d'une part en tant qu'options de menu du premier niveau de menu (90) uniquement, et d'autre part en tant qu'options de menu de plusieurs niveaux de menu ordonnés (90).

8. Système de commande selon l'une quelconque des revendications précédentes, dans le cadre duquel les groupes générateurs de pression (6 ; 8 ; 12-16 ; 20 ; 26-30) comportent des soupapes électromagnétiques (6 ; 8 ; 14 ; 16 ; 26 ; 28) et l'unité de puissance (24) comporte des moyens de commande électriques (34-52) pour les soupapes électromagnétiques (6 ; 8 ; 12-16 ; 18 ; 26 ; 28), qui opèrent à basse tension.

9. Système de commande selon l'une quelconque des revendications précédentes, dans le cadre duquel l'unité de puissance (24) comporte un moyen d'émission d'énergie (56) et l'unité de réglage (64) comporte un moyen de réception d'énergie (66), le moyen d'émission d'énergie (56) effectuant une transmission sans fil d'énergie électrique au moyen de réception d'énergie (66) afin d'alimenter l'unité de réglage (64) en énergie électrique.

10. Système de commande selon la revendication 9, dans le cadre duquel l'unité de réglage (64) comporte un accumulateur (70) destiné à l'accumulation d'énergie électrique ainsi qu'un moyen de charge (68) couplé au moyen de réception d'énergie (66) et à l'accumulateur (70) afin de recharger l'accumulateur (70) au moyen de l'énergie transmise.

11. Système de commande selon l'une quelconque des revendications précédentes, dans le cadre duquel l'unité de réglage (64) comporte un moyen de couplage, par l'intermédiaire duquel l'unité de réglage (64) peut être couplée de façon mécanique et amovible à un moyen de couplage associé de l'unité de puissance (24).

12. Système de commande selon l'une quelconque des revendications précédentes, dans le cadre duquel l'unité de réglage (64) présente une mémoire programme pour enregistrer des programmes de commande, afin de commander le dispositif de bien-être (2), et l'interface (74 ; 76) de l'unité de réglage (64) est réalisée de manière à pouvoir communiquer en outre avec une interface externe pour le chargement de programmes de commande dans la mémoire programme.

13. Système de commande selon la revendication 12, en rapport avec la revendication 11, dans le cadre duquel l'interface externe est contenue dans une station de charge externe, qui présente un moyen de couplage pouvant être couplé de façon mécanique et amovible à l'unité de réglage (64) par l'intermédiaire de son moyen de couplage, l'interface externe et l'interface de l'unité de réglage (64) communiquant essentiellement l'une avec l'autre uniquement lorsque l'unité de réglage (64) et la station de charge sont couplées mécaniquement l'une à l'autre.

14. Système de commande selon l'une quelconque des revendications précédentes, dans le cadre duquel l'interface (58 ; 60 ; 74 ; 76) est réalisée de manière à transmettre les instructions de commande et/ou les programmes de commandes par ondes radioélectriques.

15. Système de commande selon l'une quelconque des revendications précédentes, dans le cadre duquel l'unité de puissance (24) comporte un module de base (22) avec plusieurs moyens de commande (34-44) pour commander les groupes générateurs de pression (6 ; 8 ; 12-16 ; 20) du dispositif de bien-être (2), module pouvant être couplé à un module d'extension (32), qui comporte plusieurs moyens de commande supplémentaires (46-52) pour commander d'autres groupes générateurs de pression (26-30) du dispositif de bien-être (2).

16. Système de commande selon la revendication 15, dans le cadre duquel le module de base (22) peut être couplé au module d'extension (32) au moyen d'un système de bus (62), par l'intermédiaire duquel les instructions de commande reçues par l'unité de réglage (64) sont transmises au module d'extension (32).

17. Système de commande selon l'une quelconque des revendications précédentes, dans le cadre duquel l'interface utilisateur de l'unité de réglage (64) comporte différents programmes de commande pour la commande du dispositif de bien-être (2) en tant qu'options de menu d'un niveau de menu.

18. Système de commande selon la revendication 17, dans le cadre duquel le moyen de sortie (78) de l'unité de réglage (64) indique, pendant le déroulement d'un programme de commande, l'état de commande du dispositif de bien-être (2).

19. Système de commande selon l'une quelconque des revendications précédentes, dans le cadre duquel un historique du fonctionnement du dispositif de bien-être (2) est enregistré et mémorisé.

20. Système de commande selon l'une quelconque des revendications précédentes, dans le cadre duquel l'interface utilisateur comporte un mode de programmation en tant qu'option de menu, un programmeur pouvant entrer, lors de l'installation du dispositif de bien-être (2), des réglages de base pour la commande des groupes générateurs de pression individuels(6 ; 8 ; 12-16 ; 20 ; 26-30).

21. Système de commande selon la revendication 20, dans le cadre duquel l'accès au mode de programmation est protégé par un code.

22. Procédé de commande pour un dispositif de bien-être (2), tel qu'un bain à remous, un sauna, une douche de vapeur, destiné à commander plusieurs groupes générateurs de pression (6 ; 8 ; 12-16 ; 20 ; 26-30), tels que des pompes, des soupapes, du dispositif de bien-être (2), dans le cadre duquel :
◆ les groupes générateurs de pression (6 ; 8 ; 12-16 ; 20 ; 26-30) peuvent être commandés par l'intermédiaire de signaux de commande électriques par une unité de puissance (24) présentant plusieurs moyens de commande (34-52), pouvant être couplés aux groupes générateurs de pression (6 ; 8 ; 12-16, 26-30), et
◆ des instructions de commande pour commander les groupes générateurs de pression (6 ; 8 ; 12-16 ; 20 ; 26-30) peuvent être entrées par une unité de réglage (64) comprenant un moyen d'entrée (80-86) et un moyen de sortie (78), le moyen d'entrée (80-86) et le moyen de sortie (78) formant une interface utilisateur,
◆ l'unité de puissance (24) et l'unité de réglage (64) étant réalisées sous la forme de deux unités séparées avec respectivement un boîtier individuel et communiquant l'une avec l'autre par l'intermédiaire d'une interface (58 ; 60 ; 74 ; 76) pour la transmission des instructions de commande de l'unité de réglage (64) à l'unité de puissance (24),
◆ les instructions de commande pouvant être entrées par l'intermédiaire d'une interface utilisateur guidée par menu, dans laquelle les groupes générateurs de pression individuels (6; 8 ; 12-16 ; 20 ; 26-30), leurs possibilités de commande et les valeurs de commande associées peuvent être appelées en tant qu'options de menu individuelles,
**caractérisé en ce que** l'interface utilisateur est réalisée de manière autoadaptative, de telle sorte que la fréquence du choix de certaines options du menu soit enregistrée, et **en ce que** les options souvent appelées soient placées au début d'un niveau de menu.

23. Procédé de commande selon la revendication 22, dans le cadre duquel le guidage par menu de l'interface utilisateur comporte les groupes générateurs de pression individuels (6 ; 8 ; 12-16 ; 20 ; 26-30) en tant qu'options de menu d'un premier niveau de menu (90).

24. Procédé de commande selon la revendication 23, dans le cadre duquel le guidage par menu comporte également les différentes possibilités de commande et les valeurs de commande associées des groupes générateurs de pression individuels (6 ; 8 ; 12-16 ; 20 ; 26-30) en tant qu'options de menu du premier niveau de menu (90).

25. Procédé de commande selon la revendication 23, dans le cadre duquel le guidage par menu comporte les différentes possibilités de commande des groupes générateurs de pression individuels (6 ; 8 ; 12-16 ; 20 ; 26-30) en tant qu'options de menu d'un deuxième niveau de menu, qui dépend du premier niveau de menu.

26. Procédé de commande selon la revendication 25, dans le cadre duquel le guidage par menu comporte les différentes valeurs de commande des groupes générateurs de pression individuels (6 ; 8 ; 12-16 ; 20 ; 26-30) en tant qu'options de menu d'un troisième niveau de menu, qui dépend du deuxième niveau de menu.

27. Procédé de commande selon les revendications 24 et 25 ou 26, dans le cadre duquel le guidage par menu entre les deux représentations des groupes générateurs de pression (6 ; 8 ; 12-16 ; 20 ; 26-30), de leurs possibilités de commande et des valeurs de commande associées peut être commuté d'une part en tant qu'options de menu du premier niveau de menu (90) uniquement, et d'autre part en tant qu'options de menu de plusieurs niveaux de menu ordonnés (90).

28. Procédé de commande selon l'une des revendications 22 à 27, dans le cadre duquel l'unité de puissance (24) effectue une transmission sans fil d'énergie électrique à l'unité de réglage (64) afin d'alimenter l'unité de réglage (64) en énergie électrique.

29. Procédé de commande selon l'une quelconque des revendications 22 à 28, dans le cadre duquel des programmes de commande destinés à commander le dispositif de bien-être (2) peuvent être chargés par une interface externe par l'intermédiaire de l'interface (74 ; 76) de l'unité de commande (64).

30. Procédé de commande selon l'une quelconque des revendications 22 à 29, dans le cadre duquel les instructions de commande et/ou les données des programmes sont transmises par ondes radioélectriques.

31. Procédé de commande selon l'une quelconque des revendications 22 à 30, dans le cadre duquel l'interface utilisateur de l'unité de réglage comporte différents programmes de commande pour la commande du dispositif de bien-être (2) en tant qu'options de menu.

32. Procédé de commande selon la revendication 31, dans le cadre duquel un programme de commande choisi par l'utilisateur est transmis à l'unité de puissance (24) et est alors lancé suite à la transmission d'un signal de départ.

33. Procédé de commande selon la revendication 31 ou 32, dans le cadre duquel l'état de commande momentané du dispositif de bien-être (2) pendant le déroulement d'un programme de commande est indiqué par l'unité de réglage (64).

34. Procédé de commande selon l'une des revendications 22 à 33, dans le cadre duquel l'interface utilisateur comporte un mode de programmation en tant qu'option de menu, dans lequel un programmeur peut entrer, lors de l'installation du dispositif de bien-être (2), des réglages de base pour la commande des groupes générateurs de pression individuels (6 ; 8 ; 12-16 ; 20 ; 26-30).

35. Procédé de commande selon la revendication 34, dans le cadre duquel l'accès au mode de programmation est protégé par un code.

36. Procédé de commande selon l'une quelconque des revendications 22 à 35, dans le cadre duquel un historique du fonctionnement du dispositif de bien-être (2) est enregistré et mémorisé.
